# EUROPÄISCHE PATENTANMELDUNG

(11) **EP 0 910 973 A2**
(43) Veröffentlichungstag der Anmeldung: **28.04.1999**
(21) Anmeldenummer: 98119170.3
(22) Anmeldetag: 10.10.1998
(51) Int. Cl.: A47C 3/30, A47B 9/10, F16F 9/02

(54) **Führungsbüchse und längenverstellbare Säule mit Führungsbüchse**

(30) Priorität: 16.10.1997 DE 19745711; 19.09.1998 DE 19842957
(71) Anmelder: SUSPA COMPART Aktiengesellschaft, 90518 Altdorf (DE)
(72) Erfinder: Böhm, Fred, 95119 Naila (DE); Weisser, Frank, 91257 Pegnitz (DE); Lang, Peter, 95500 Heinersreuth (DE); Böhm, Walter, 90537 Feucht (DE)
(74) Vertreter: Rau, Manfred, Dr. Dipl.-Ing.

(57) **Zusammenfassung**

Eine Führungsbüchse (1) für eine längenverstellbare Säule für Stühle, Tische oder dergleichen ist in ihrem inneren Bereich mit einer zu einer Mittel-Längs-Achse (4) konzentrischen Gleitbüchse (3) zur Führung eines zylindrischen Gehäuses (9) einer Gasfeder (10) versehen. Die Außenwand (15) der Gleitbüchse (3) ist zur Aufnahme und Abstützung radial zur Achse (4) in einem Standrohr der Säule mit voneinander distanzierten Rippen (5) versehen. Die Rippen (5) sind radial zur Mittel-Längs-Achse (4) elastisch verformbar ausgebildet.

## Beschreibung

Die Erfindung betrifft eine Führungsbüchse nach dem Oberbegriff des Anspruches 1 und eine längenverstellbare Säule nach dem Oberbegriff des Anspruches 12.

Eine derartige Führungsbüchse und eine derartige Säule sind aus DE-G 92 00 884.4 U1 (entsprechend US-Patent 5,496,115) bekannt. Diese bekannte Führungsbüchse weist am Innenumfang ihrer Gleitbüchse schmale Führungsstege zur Führung des Gehäuses eines Verstellelementes, insbesondere einer längenverstellbaren Gasfeder, auf. Am Außenumfang der Gleitbüchse sind Rippen-Stege ausgebildet, die exakt radial zur gemeinsamen Mittel-Längs-Achse verlaufen und die die Gleitbüchse starr und radial zur Mittel-Längs-Achse unbeweglich im Standrohr der Säule abstützen. Die Rippen-Stege sind zusammen mit der Gleitbüchse sehr steif, so daß keine unbeabsichtigten radialen Bewegungen des Gehäuses des Längenverstellelementes möglich sind. Ein unmittelbarer Ausgleich von Toleranzen des Innendurchmessers des Standrohres ist hiermit nicht möglich.

Soweit es um die Ausgestaltung der Rippen-Stege und die insoweit radial zur Mittel-Längs-Achse starre Abstützung der Gleitbüchse in einem Standrohr geht, sind vergleichbare Lösungen aus DE 40 24 392 A1 (entsprechend US-Patent 5,152,646) und DE-G 88 00 976.9 U1 (entsprechend US-Patent 4,899,969) bekannt.

Aus dem US-Patent 5,161,786 ist ein Standrohr aus Kunststoff bekannt, das so ausgebildet ist, daß es ein Standrohr aus Metall ersetzt. Es weist an seiner Innenfläche sich über deren volle Länge erstreckende, radial zur Mittel-Längs-Achse verlaufende starre Rippen-Stege auf, die an ihrem inneren Ende mit flexiblen Unterstützungsvorsprüngen versehen sind, die zusammen einen schwimmenden Unterstützungsring bilden, der seitliche Bewegungen des Gehäuses eines Längenverstellelementes im Bereich des oberen Endes der Säule ermöglicht. Diese Unterstützungsvorsprünge haben die doppelte Funktion, das Längenverstellelement nachgiebig zu führen, gleichzeitig aber Lasten eine ausreichende Steifigkeit entgegen zu setzen. Da das Standrohr, die radial verlaufenden Rippen-Stege und die an diesen ausgebildeten Unterstützungsvorsprünge insgesamt einstückig aus Kunststoff ausgebildet sind, stellt sich das Problem des Ausgleichs von Toleranzen des Innendurchmessers des Standrohres nicht.

Der Erfindung liegt die Aufgabe zugrunde, eine Führungsbüchse der gattungsgemäßen Art und eine Säule der gattungsgemäßen Art so auszugestalten, daß Toleranzen des Innendurchmessers des von der Führungsbüchse gesonderten Standrohres ausgeglichen werden können.

Diese Aufgabe wird bei einer Führungsbüchse der gattungsgemäßen Art durch die Merkmale im Kennzeichnungsteil des Anspruches 1 und bei einer Säule der gattungsgemäßen Art durch die Merkmale im Kennzeichnungsteil des Anspruches 12 gelöst. Der Kern der Erfindung besteht darin, daß die in sich starre Gleitbüchse der Führungsbüchse selber - bezogen auf die Mittel-Längs-Achse - in radialer Richtung elastisch nachgiebig im Standrohr gelagert und abgestützt ist. Dadurch werden Toleranzen des Innendurchmessers der Standrohre kompensiert. Des weiteren kann auch die in ein Standrohr eingesetzte Führungsbüchse radial in gewissem Umfang nachgeben, so daß Fluchtungsfehler zwischen der Mittel-Längs-Achse des Standrohres und des eingesetzten Verstellelementes, regelmäßig also der längenverstellbaren Gasfeder, kompensierbar sind.

Vorteilhafte und zum Teil erfinderische Ausgestaltungen ergeben sich aus den Unteransprüchen.

Weitere Merkmale, Vorteile und Einzelheiten ergeben sich aus der Beschreibung von Ausführungsbeispielen anhand der Zeichnung. Es zeigt
- Fig. 1: einen Teilschnitt durch eine höhenverstellbare Stuhlsäule mit Standrohr, Führungsbüchse und Gasfeder,
- Fig. 2: die Führungsbüchse im Längsschnitt,
- Fig. 3: eine Draufsicht auf die Führungsbüchse gemäß dem Sichtpfeil III in Fig. 2,
- Fig. 4: einen mit IV bezeichneten Teilausschnitt aus Fig. 2 in vergrößertem Maßstab,
- Fig. 5: eine weitere Ausführungsform einer Führungsbüchse,
- Fig. 6: eine Draufsicht auf die Führungsbüchse gemäß dem Sichtpfeil VI in Fig. 5,
- Fig. 7: einen Schnitt durch die Führungsbüchse gemäß der Schnittlinie VII-VII in Fig. 5 und
- Fig. 8: eine Abwandlung des Ausführungsbeispiels nach den Fig. 2 bis 4 in einer Draufsicht auf die Führungsbüchse gemäß dem Sichtpfeil III in Fig. 2.

Eine Führungsbüchse 1 ist in einem Standrohr 2 aus Stahl einer höhenverstellbaren Stuhlsäule angeordnet. Derartige Stuhlsäulen sind beispielsweise aus der EP 0 366 889 B1 (entsprechend US-Patent 4,969,619) bekannt, worauf ausdrücklich verwiesen wird.

Die sich höchstens über die halbe Länge des Standrohres 2 erstreckende Führungsbüchse 1 weist eine innere Gleitbüchse 3 auf, an deren Außenseite radial zur gemeinsamen Mittel-Längs-Achse 4 nach außen vorspringende, als Rippen-Stege 5', 5'' ausgebildete Rippen angeformt sind, die sich parallel zur Achse 4 erstrecken. Mit diesen Rippen-Stegen 5', 5'' stützt sich die vom Standrohr 2 gesonderte Führungsbüchse 1 radial gegen die Innenwand 6 des Standrohres 2 ab. Ein oberer Ringbund 7 legt die Führungsbüchse 1 in axialer Richtung gegenüber dem Standrohr 2 fest. Im übrigen ist die Führungsbüchse 1 unter elastischer Biegeverformung der Rippen-Stege 5 mit Preßsitz in das Standrohr 2 eingeschoben.

An der Innenfläche 8 der Gleitbüchse 3 ist ein Gehäuse 9 einer nur angedeuteten längenverstellbaren Gasfeder 10 in Richtung der Achse 4 verschiebbar geführt. Aus dem Gehäuse 9 erstreckt sich konzentrisch zur Achse 4 eine Kolbenstange 11 der Gasfeder nach unten, die auf einer Bodenplatte 12 des Standrohres 2 mittels eines Axial-Lagers 13 abgestützt und mittels eines Sicherungsbügels 14 in Richtung der Achse 4 festgelegt ist.

Diese Gasfeder 10 bildet zusammen mit dem Standrohr 2 und der Führungsbüchse 1 im wesentlichen die angesprochene höhenverstellbare Stuhlsäule. Das Gehäuse 9 der Gasfeder 10 kann deren unmittelbares Gehäuse sein, oder ein zusätzliches, die Gasfeder 10 umgebendes Tragrohr, wie es aus der EP 0 325 726 A1 (entsprechend dem US-Patent 4,899,969) bekannt ist, worauf ebenfalls ausdrücklich verwiesen wird.

Die Führungsbüchse 1 besteht aus Kunststoff, und zwar bevorzugt aus einem Polyphenylenoxid, und ist einstückig durch Spritzgießen hergestellt. Die Innenfläche 8 der in sich starren Gleitbüchse 3 ist etwa ringzylindrisch ausgebildet und in ihrem Innendurchmesser dem Außendurchmesser des zylindrischen Gehäuses 9 angepaßt, so daß dieses in der Gleitbüchse 3 radial zur Achse 4 weitgehend spielfrei aber in Richtung der Achse 4 reibungsarm verschiebbar geführt ist.

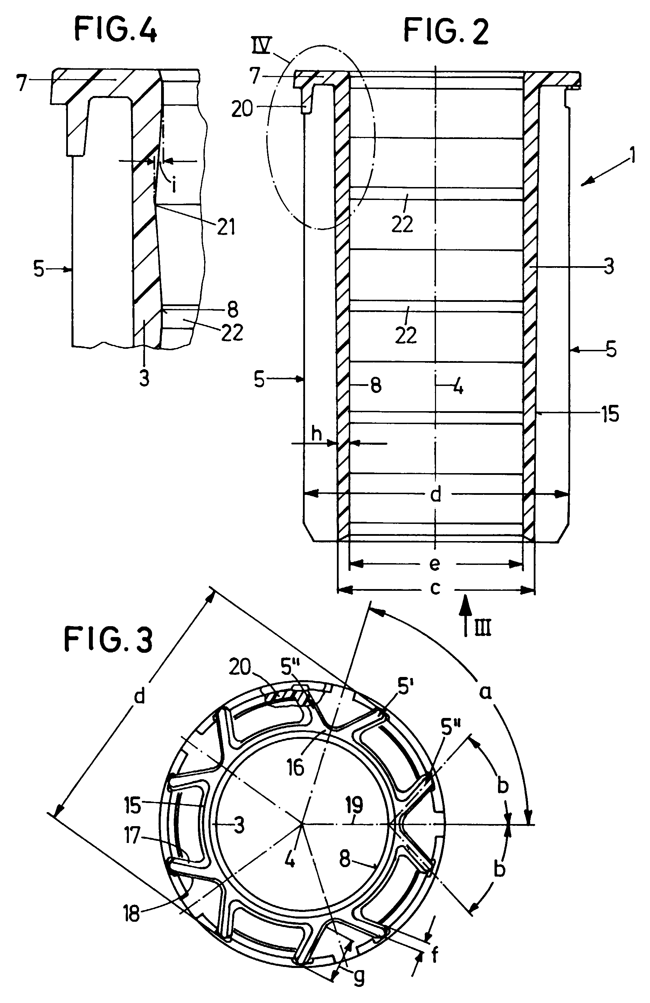

Die an der Außenwand 15 der Gleitbüchse 3 ausgebildeten Rippen-Stege 5', 5'' sind jeweils paarweise ausgebildet, wobei jeweils die Rippen-Stege 5' und 5'' eines Paares in der Querschnittsdarstellung gemäß Fig. 3 radial zur Achse 4 von innen nach außen voneinander weg geneigt sind. Die Paare von Rippen-Stegen 5', 5'' sind jeweils in gleichen Winkelabständen zueinander angeordnet, d. h. der von zwei benachbarten Paaren von Rippen-Stegen 5', 5'' eingenommene Winkel a ist bei den im Ausführungsbeispiel dargestellten fünf Paaren von Rippen-Stegen 5', 5'' 72°. Die Rippen-Stege 5', 5'' eines Paares sind mit einem gemeinsamen Fußbereich 16 an der Außenwand 15 der Gleitbüchse 3 einstückig mit dieser ausgebildet. Die mit zueinander etwa parallelen äußeren Flanken 17 und inneren Flanken 18 ausgebildeten Rippen-Stege 5', 5'' weisen gegenüber einer die Achse 4 aufnehmenden Axialebene 19 einen Neigungswinkel b auf, der im vorliegenden Ausführungsbeispiel 38° beträgt und üblicherweise zwischen 35° und 45° liegen sollte. Für das Verhältnis des Außendurchmessers c der Gleitbüchse 3 zum Außendurchmesser d der Rippen-Stege 5 gilt 0,6 ≤ c/d ≤ 0,8 und bevorzugt c/d ≅ 0,7. Daraus ergibt sich, daß die Rippen-Stege 5', 5'' radial zur Achse 4 relativ lang ausgebildet sind und aufgrund ihrer geschilderten Neigung voneinander weg biegbar bzw. verformbar sind, so daß sie Toleranzen im Innendurchmesser k des Standrohres 2 elastisch nachgiebig ausgleichen können, ohne daß die Gleitbüchse 3 verformt wird. Sie können also auf der Gleitbüchse 3 zu deren Außenwand 15 hin leicht elastisch verbogen werden. Ihre Dicke f liegt zwischen 1 und 3 mm bei einer Länge g von der Außenwand 15 der Gleitbüchse 3 im Bereich von 5,5 bis 13,5 mm, die mindestens doppelt so groß ist wie die Dicke f.

Die Rippen-Stege 5', 5'' jedes Paares von Rippen-Stegen 5', 5'' sind einstükkig mit dem Ringbund 7 ausgebildet und am Ringbund 7 mittels eines Teil-Ringsteges 20 gegeneinander abgestützt, der ebenfalls einstückig mit dem Ringbund 7 ausgebildet ist. Hierdurch wird vermieden, daß die Rippen-Stege 5', 5'' zu weich voneinander weg bzw. zur Gleitbüchse 3 hin verformbar sind.

Bei einem üblichen Innendurchmesser e der Gleitbüchse 3 von 28 mm weist die Gleitbüchse eine mittlere Wanddicke h von 2 bis 3 mm und bevorzugt von 2,5 mm auf. Die Gleitbüchse 3 ist in sich also relativ starr.

Die Innenfläche der Gleitbüchse 3 ist nicht exakt zylindrisch ausgebildet, sondern weist gemäß der Darstellung in Fig. 4 im Querschnitt etwa dreieckförmige Hinterschneidungen 21 auf, deren größte Tiefe i nur wenige Zehntel Millimeter, beispielsweise 0,3 mm, betragt. Jeweils zwei benachbarte, sich jeweils über den vollen Umfang der Innenfläche 8 erstreckende Hinterschneidungen 21 sind durch einen ringzylindrischen Führungs-Abschnitt 22 voneinander getrennt, an denen das Gehäuse 9 der Gasfeder 10 exakt geführt wird. Die Hinterschneidungen 21 dienen als Fettkammern, wodurch einerseits eine äußerst reibungsarme Führung des Gehäuses 9 in der Gleitbüchse 3 andererseits aber trotzdem die erwähnte radial zur Achse 4 im wesentlichen spielfreie Führung für die Gasfeder 10 gewährleistet ist.

Der Außendurchmesser d der Rippen-Stege 5 ist in nicht in ein Standrohr 2 eingesetztem Zustand der Führungsbüchse, also in unverformtem Zustand der Rippen-Stege 5, auf jeden Fall etwas größer als der größtmögliche Innendurchmesser k des Standrohres 2, so daß der erwähnte feste aber immer noch leicht elastisch nachgiebige Sitz der Führungsbüchse 1 im Standrohr 2 sichergestellt ist. Es gilt 0,1 mm ≤ (d - k) ≤ 0,3 mm.

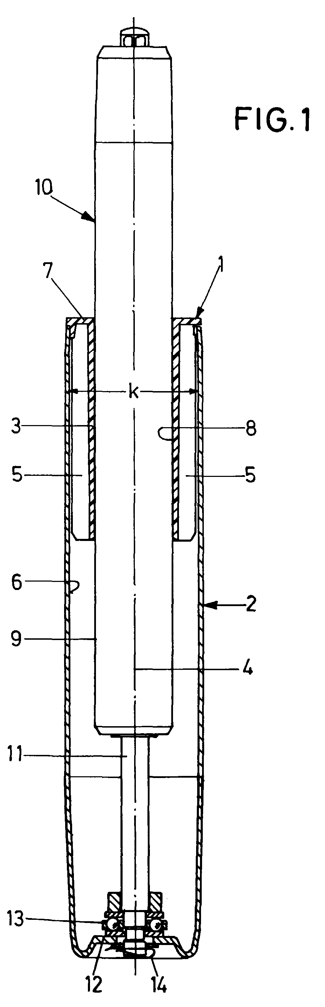

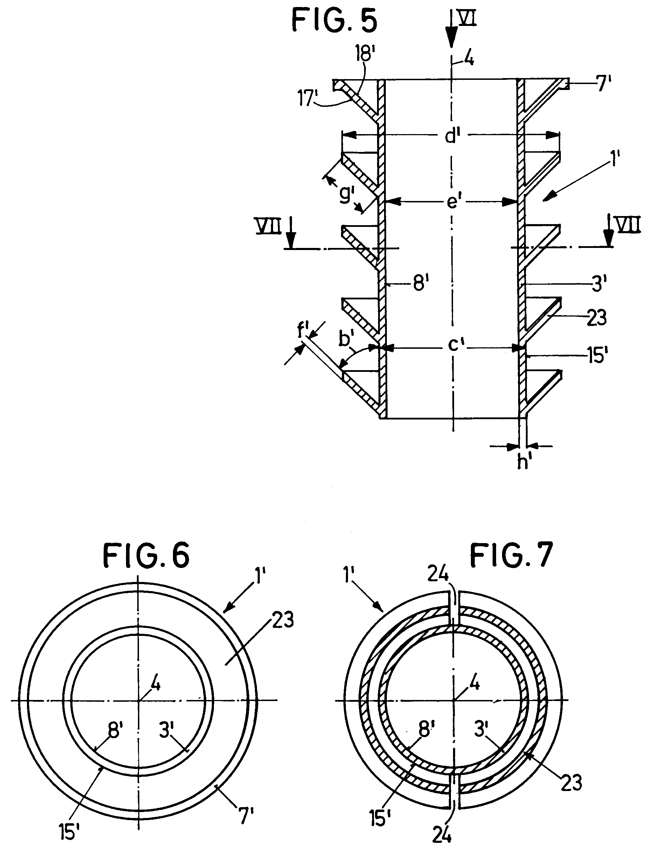

Bei der Ausführungsform nach den Figuren 5 und 6 weist die Führungsbüchse 1 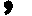 eine Gleitbüchse 3 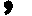 auf, an deren Außenwand 15 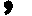 radial zur Mittel-Längs-Achse 4 vorspringende Rippen 23 ausgebildet sind, die außerdem in Richtung zur Mittel-Längs-Achse 4 hin geneigt sind. Sie sind insgesamt also kegelstumpfförmig, sich nach oben öffnend, ausgebildet. An der oberen umlaufenden Rippe 23 ist ein Ringbund 7 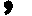 zur Anlage auf dem Standrohr 2 ausgebildet. Diese Rippen 23 können - wie aus Fig. 6 hervorgeht - ohne Unterbrechung, also über 360° Umfangswinkel, zur Mittel-Längs-Achse 4 durchgehend ausgebildet sein, oder aber - gemäß der Darstellung in Fig. 7 - durch einen oder mehrere radial zur Achse 4 verlaufende Schlitze 24 segmentiert sein. Durch derartige Schlitze 24, d. h. durch entsprechende Segmentierung, wird die Elastizität der Rippen 23 in Richtung der Achse 4 und damit auch radial zur Achse 4 erhöht. Ansonsten gilt auch für diese Ausgestaltung der Rippen 23 die obige Beschreibung. Insoweit werden in den Figuren 5 bis 7 für gleichartige Teile die gleichen Bezugsziffern wie im Ausführungsbeispiel nach den Figuren 1 bis 4, jedoch mit einem hochgesetzten Strich verwendet, ohne daß es einer erneuten Beschreibung bedarf.

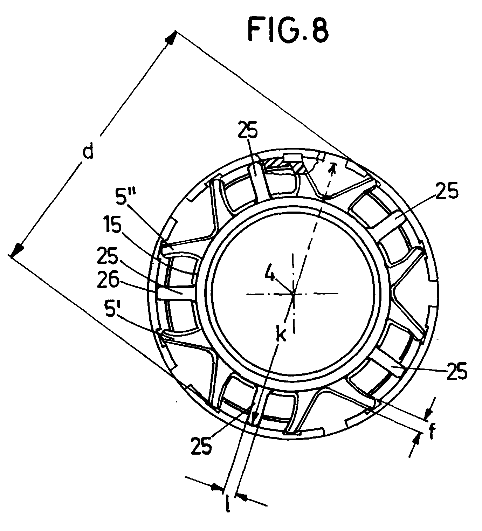

Wie sich aus Fig. 8 ergibt, können bei der Führungsbüchse 1 nach den Fig. 2 bis 4 Begrenzungs-Stege 25 vorgesehen sein, die ebenfalls parallel zur Achse 4 verlaufen und auf der Außenwand 15 der Führungsbüchse 1 angeordnet und einstückig mit dieser ausgebildet sind. Gemäß Fig. 8 können derartige Begrenzungs-Stege 25 jeweils mittig zwischen zwei einander benachbarten Paaren von V-förmig zueinander angeordneten Rippenstegen 5 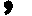 , 5 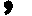 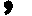 angeordnet sein. Die Begrenzungs-Stege 25 erstrecken sich radial zur Achse 4 und sind im Gegensatz zu den Rippen-Stegen 5 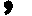 , 5 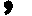 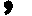 radial nicht elastisch verformbar. Der Außendurchmesser k der Begrenzungs-Stege 25 ist geringfügig kleiner als der Außendurchmesser d der Rippen-Stege 5 bzw. 5 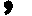 , 5 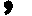 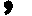 . Es gilt 0,4 mm ≤ (d-k) ≤ 0,8 mm. Für die Dicke l der Begrenzungs-Stege 25 gilt 2,0 mm ≤ l ≤ 3,0 mm. Wie weiterhin Fig. 8 entnehmbar ist, gilt für das Verhältnis der Dicke l der Begrenzungs-Stege 25 zu der Dicke f der Rippen-Stege 5 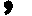 , 5 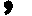 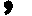 1,0 ≤ l/f ≤ 2,0.

Die Begrenzungs-Stege 25 haben die Aufgabe, die Verformung der Rippen-Stege 5, 5 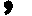 radial zur Achse 4 zu begrenzen, so daß die Abstützung der Führungsbüchse 1 im Standrohr 2 nicht zu weich wird. Die Rippen-Stege 5, 5 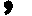 können sich soweit verformen, bis die Begrenzungs-Stege 25 mit ihrer radial außenliegenden Anschlagfläche 26 zur Anlage an der Innenwand 6 des Standrohres 2 kommen. Hierzu ist es zweckmäßig, wenn die Anschlagfläche 26 im wesentlichen eine Teil-Zylinderfläche mit dem Durchmesser k bildet, so daß sie flächig und nicht nur mit einer Linienberührung an der Innenwand 6 des Standrohres 2 zur Anlage kommt.

## Patentansprüche

1. Führungsbüchse (1; 1 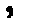 ) für eine längenverstellbare Säule für Stühle, Tische oder dergleichen, die in ihrem inneren Bereich mit einer zu einer Mittel-Längs-Achse (4) konzentrischen Gleitbüchse (3; 3 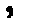 ) zur Führung eines zylindrischen Gehäuses (9) eines Verstellelementes (Gasfeder 10) versehen ist, wobei die Außenwand (15; 15 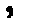 ) der Gleitbüchse (3, 3 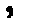 ) zur Aufnahme und Abstützung radial zur Achse (4) in einem Standrohr (2) der Säule mit voneinander distanzierten Rippen (5; 23) versehen ist, **dadurch gekennzeichnet, daß** die Rippen (5; 23) radial zur Mittel-Längs-Achse (4) elastisch verformbar ausgebildet sind.

2. Führungsbüchse nach Anspruch 1, **dadurch gekennzeichnet, daß** die Rippen als Rippen-Stege (5', 5'') ausgebildet sind und jeweils paarweise - radial zur Mittel-Längs-Achse (4) von innen nach außen gesehen - voneinander weg geneigt angeordnet sind.

3. Führungsbüchse nach Anspruch 2, **dadurch gekennzeichnet, daß** die Paare von Rippen-Stegen (5', 5'') jeweils in gleichen Winkelabständen (a) zur Mittel-Längs-Achse (4) angeordnet sind.

4. Führungsbüchse nach Anspruch 2, **dadurch gekennzeichnet, daß** die Rippen-Stege (5', 5'') jedes Paares von Rippen-Stegen (5', 5'') mit einem gemeinsamen Fußbereich (16) an der Außenwand (15) der Gleitbüchse (3) einstückig mit dieser ausgebildet sind.

5. Führungsbüchse nach Anspruch 2, **dadurch gekennzeichnet, daß** die Rippen-Stege (5', 5'') jedes Paares von Rippen-Stegen (5', 5'') symmetrisch zu einer die Mittel-Längs-Achse (4) aufnehmenden Axialebene (19) angeordnet sind.

6. Führungsbüchse nach Anspruch 1, **dadurch gekennzeichnet, daß** die Rippen (5; 23) eine Erstreckung (g; g 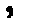 ) von der Außenwand (15; 15 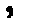 ) der Gleitbüchse (3; 3 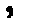 ) radial zur Mittel-Längs-Achse (4) nach außen aufweisen, die mindestens doppelt so groß ist, wie die Dicke (f; f 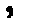 ) der Rippen (5; 23).

7. Führungsbüchse nach Anspruch 1, **dadurch gekennzeichnet, daß** die Rippen (5; 23) etwa zueinander parallele äußere Flanken (17) und innere Flanken (18) aufweisen.

8. Führungsbüchse nach Anspruch 1, **dadurch gekennzeichnet, daß** die Rippen (23) - in Richtung der Mittel-Längs-Achse (4) gesehen - zur Außenwand (15 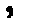 ) der Gleitbüchse (3 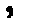 ) hin geneigt sind.

9. Führungsbüchse nach Anspruch 8, **dadurch gekennzeichnet, daß** die Rippen (23) sich kegelstumpfförmig öffnend ausgebildet sind.

10. Führungsbüchse nach Anspruch 9, **dadurch gekennzeichnet, daß** die Rippen (23) durch mindestens einen Schlitz (24) segmentiert sind.

11. Führungsbüchse nach Anspruch 1, **dadurch gekennzeichnet, daß** an der Außenwand (15) der Gleitbüchse (3) radial zur Achse (4) verlaufende Begrenzungs-Stege (25) ausgebildet sind, deren Außendurchmesser (k) etwas kleiner ist als der Außendurchmesser (d) der Rippen (5).

12. Längenverstellbare Säule für Stühle, Tische oder dergleichen mit einer Führungsbüchse (1; 1'), die in ihrem inneren Bereich mit einer zu einer Mittel-Längs-Achse (4) konzentrischen Gleitbüchse (3; 3 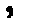 ) zur Führung eines zylindrischen Gehäuses (9) eines Verstellelementes (Gasfeder 10) versehen ist, wobei die Außenwand (15; 15 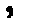 ) der Gleitbüchse (3; 3 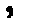 ) zur Aufnahme und Abstützung radial zur Achse (4) in einem Standrohr (2) der Säule mit voneinander distanzierten Rippen (5; 23) versehen ist, **dadurch gekennzeichnet, daß** die Rippen (5; 23) radial zur Mittel-Längs-Achse (4) elastisch verformbar ausgebildet sind.

13. Längenverstellbare Säule nach Anspruch 12, **dadurch gekennzeichnet, daß** die Rippen als Rippen-Stege (5', 5'') ausgebildet und jeweils paarweise - radial zur Mittel-Längs-Achse (4) von innen nach außen gesehen - voneinander weg geneigt angeordnet sind.

14. Längenverstellbare Säule nach Anspruch 13, **dadurch gekennzeichnet, daß** die Paare von Rippen-Stegen (5', 5'') jeweils in gleichen Winkelabständen (a) zur Mittel-Längs-Achse (4) angeordnet sind.

15. Längenverstellbare Säule nach Anspruch 13, **dadurch gekennzeichnet, daß** die Rippen-Stege (5', 5'') jedes Paares von Rippen-Stegen (5', 5'') mit einem gemeinsamen Fußbereich (16) an der Außenwand (15) der Gleitbüchse (3) einstückig mit dieser ausgebildet sind.

16. Längenverstellbare Säule nach Anspruch 13, **dadurch gekennzeichnet, daß** die Rippen-Stege (5', 5'') jedes Paares von Rippen-Stegen (5', 5'') symmetrisch zu einer die Mittel-Längs-Achse (4) aufnehmenden Axialebene (19) angeordnet sind.

17. Längenverstellbare Säule nach Anspruch 12, **dadurch gekennzeichnet, daß** die Rippen (5; 23) eine Erstreckung (g, g') von der Außenwand (15; 15') der Gleitbüchse (3; 3') radial zur Mittel-Längs-Achse (4) nach außen aufweisen, die mindestens doppelt so groß ist, wie die Dicke (f; f') der Rippen (5; 23).

18. Längenverstellbare Säule nach Anspruch 12, **dadurch gekennzeichnet, daß** die Rippen (5; 23) etwa zueinander parallele äußere Flanken (17) und innere Flanken (18) aufweisen.

19. Längenverstellbare Säule nach Anspruch 12, **dadurch gekennzeichnet, daß** die Rippen (23) - in Richtung der Mittel-Längs-Achse (4) gesehen - zur Außenwand (15 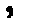 ) der Gleitbüchse (3 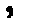 ) hin geneigt sind.

20. Längenverstellbare Säule nach Anspruch 19, **dadurch gekennzeichnet,** daß die Rippen (23) sich kegelstumpfförmig öffnend ausgebildet sind.

21. Längenverstellbare Säule nach Anspruch 20, **dadurch gekennzeichnet, daß** die Rippen (23) durch mindestens einen Schlitz (24) segmentiert sind.

22. Längenverstellbare Säule nach Anspruch 12, **dadurch gekennzeichnet, daß** an der Außenwand (15) der Gleitbüchse (3) radial zur Achse (4) verlaufende Begrenzungs-Stege (25) ausgebildet sind, deren Außendurchmesser (k) etwas kleiner ist als der Außendurchmesser (d) der Rippen (5).
